Europäisches Patentamt

European Patent Office

Office européen des brevets

(11) Veröffentlichungsnummer: **0 247 348 B1**

# EUROPÄISCHE PATENTSCHRIFT

(45) Veröffentlichungstag der Patentschrift: **09.09.92**

(51) Int. Cl.5: **B01D 9/00**

(21) Anmeldenummer: **87105624.8**

(22) Anmeldetag: **15.04.87**

(54) **Vorkristallisator.**

(30) Priorität: **10.05.86 DE 3615776**

(43) Veröffentlichungstag der Anmeldung:
**02.12.87 Patentblatt 87/49**

(45) Bekanntmachung des Hinweises auf die
Patenterteilung:
**09.09.92 Patentblatt 92/37**

(84) Benannte Vertragsstaaten:
**BE CH DE GB IT LI**

(56) Entgegenhaltungen:
**GB-A- 27 823**
**US-A- 3 020 025**
**US-A- 3 348 608**

**CHEMICAL ENGINEERING, Band 71, Nr. 6, 16.
March 1964, Seite 116, Bethlehem Corp.:
"Novel heat exchanger performs variety of
processing operations"**

(73) Patentinhaber: **Santrade Ltd.**
**Alpenquai 12 P.O. Box 321**
**CH-6002 Luzern(CH)**

(72) Erfinder: **Schermutzki, Konrad, Ing. grad.**
**Panoramaweg 72**
**W-7148 Remseck 3(DE)**

(74) Vertreter: **Wilhelm, Hans-Herbert, Dr.-Ing.**
**Wilhelm & Dauster Patentanwälte Hospital-
strasse 8**
**W-7000 Stuttgart 1(DE)**

## Beschreibung

Die Erfindung betrifft einen Vorkristallisator, bestehend aus einem von einem Kühlmantel umgebenen und mit Zu- und Abführöffnungen für eine vorzukristallisierende Schmelze versehenen Rohr, in dem drehbar ein von einem Motor angetriebener Rotorkörper angeordnet ist, der mit radial abstehenden Kratzern versehen ist, die im Bereich der Rohrwand umlaufen, als Hohlkörper ausgebildet und von einem Heizmedium durchströmt sind.

Vorkristallisatoren sind bekannt (DE-PS 3 209 747). Sie dienen dazu, den Verfestigungsprozeß von in der Form von Schmelzen vorliegenden Materialien zu beschleunigen, in dem die Keimbildung für den Kristallisationsprozeß angeregt wird. Dies geschieht durch die Abkühlung der Schmelze an der Rohrwand. Um zu verhindern, daß dort Kristalle anwachsen und zum einen nicht mehr für den Weiterverarbeitungsvorgang zur Verfügung stehen, zum anderen den Vorkristallisator unbrauchbar machen, sind die mit den Rotorkörpern verbundenen Kratzer vorgesehen, die bei ihrem Umlauf dafür sorgen, daß die an der gekühlten Rohrwand anwachsenden Kristalle entfernt werden. Nachteilig ist aber bei solchen Vorkristallisatoren, daß der mechanische Reinigungsvorgang nicht in allen Fällen ausreicht und daß vor allen Dingen ein Anbacken von Kristallen an den Kratzern selbst erfolgt, die mit zunehmender Betriebsdauer zuwachsen und ihre eigentliche Aufgabe zum einen nicht mehr übernehmen können, zum anderen auch zu einer unerwünschten Belastung der Rohrwandung, zu deren Verformung, und zu einer Verringerung der Abkühlleistung und zu einer Unwucht des Rotors führen können. Man hat sich bisher dadurch beholfen, daß mehrere Vorkristallisatoren dem eigentlichen Produktionsgerät, beispielsweise einem Tropfenformer parallel vorgeschaltet wurden, so daß stets ein einsatzfähiger Vorkristallisator vorhanden ist, während andere durch Demontage oder Wiederaufschmelzen des festgesetzten Materiales einsatzfähig gemacht wurden. Diese Betriebsmethode ist jedoch aufwendig.

Bekannt sind aber auch Vorkristallisatoren der eingangs genannten Art, bei denen die Kratzer als Hohlkörper ausgebildet sind, die von einem Heizmedium durchströmt werden (DE-19 17 089-B). Bei diesen Bauarten durchströmt Dampf als Heizmedium den hohlen Rohrkörper und die als hohle Schaufeln ausgebildeten Kratzer sind radial abstehend am Rohrkörper angebracht. Diese Bauarten weisen zweifellos gegenüber unbeheizten Rotoren einen Vorteil hinsichtlich des Ansetzens von Kristallen auf. Nachteilig ist aber, daß das Heizmedium nur über radial verlaufende Stichleitungen mit dem Hohlraum der Kratzer in Verbindung steht, so daß der Wärmeübergang wegen des in den Kratzern weitgehend stehenden Heizmediums nur sehr schlecht ist. Die Folge dieser Bauart ist unerwünschte Kondensation des Dampfes im Inneren der Kratzer und eine nicht ausreichende Beheizung, die zum Anbacken von Kristallen, insbesondere im radial außenliegenden Bereich der Kratzer führt.

Aus der US-A 33 48 608 ist auch eine Einrichtung zur Heiß- oder Kaltverarbeitung von Materialien bekannt, die unter Druck stehen. Diese bekannte Einrichtung besitzt einen aufrecht stehenden Druckbehälter, der innen mit einer Hohlwelle versehen ist und einen doppelten Mantel aufweist, in dem eine heiße oder eine kalte Flüssigkeit zirkulieren kann. Die dort vorgesehene Hohlwelle weist eine Reihe von radial verlaufenden Rührelementen auf, die aber nicht als Hohlkörper ausgebildet sind. Aus der US-A 30 20 025 schließlich ist ein rotierender Wärmetauscher bekannt mit einer Hohlwelle, die mit Wärmeübertragungsmitteln in der Form von Propellerschaufeln versehen ist. Dort sind innerhalb der propellerartigen Wärmetauschmittel Führungskanäle für das Wärmetauschmedium vorgesehen.

Der Erfindung liegt die Aufgabe zugrunde, einen Vorkristallisator der eingangs genannten Art so auszubilden, daß eine Kristallbildung an den Kratzern sicher vermieden wird.

Zur Lösung dieser Aufgabe wird vorgeschlagen, die Hohlkörper mit mindestens zwei hohlen Stegen auf den Rotorkörper aufzusetzen, jeden Steg mit einem in dem Rotorkörper verlaufenden Strömungskanal zur Führung des Heizmediums zu verbinden und die Außenkontur der Stege mit Umlenkflächen für die Schmelze zu versehen. Es hat sich gezeigt, daß bei einer solchen Ausgestaltung eine ausreichende Aufheizung der Kratzer in allen Bereichen erreicht wird, so daß kein Festsetzen von Kristallen auftritt. Wesentlich längere Betriebszeiten des Vorkristallisators sind dadurch erzielbar. Die Verweilzeit der von der Rohrwand abgekratzten Kristalle an den Kratzern ist, bedingt durch die umlaufende Bewegung relativ kurz, so daß die abgekratzten Kristalle durch die Beheizung nicht, wie an sich zu vermuten wäre, in Schmelze zurückgeführt werden, was an sich unerwünscht wäre. Im Vorkristallisator soll ja die Kristallbildung angeregt werden. Trotzdem genügt die Beheizung, die Kratzer selbst vor einem Ansetzen auskristallisierter Schmelze zu bewahren. Auch im Bereich radial innerhalb der Kratzer, d.h. im Bereich zwischen den Befestigungsstegen für die Kratzer ist eine Bewegung der Schmelze zum Zweck des Mischens mit von Kristallen angereicherten Bereichen erreichbar. Gleichzeitig damit wird aber auch erreicht, daß die von den Kratzern von den Wänden entfernten Kristalle aufgrund der in diesem Bereich erzeugten Bewegungen der Schmelze wieder von den Kratzern entfernt werden, so daß ihre Verweilzeit, wie eingangs angedeutet an den Kratzern nur verhältnismäßig kurz ist.

Bei Verwendung von Dampf als Heizmedium wird dieser durch einen der Stege in den zugeordneten Kratzer gefördert und erst nach dem Durchlaufen der Kratzer als Kondensat durch den Rotorkörper zurück nach außen geführt. Möglich wäre aber auch, als Heizmedium stark aufgeheizte Schmelze zu verwenden, die sich beim Durchlaufen der Kratzer und der zugeordneten Strömungskanäle so weit abkühlt, daß sie anschließend dem Innenraum des Rohres des Vorkristallisators übergeben werden kann. Diese Ausführung hätte den Vorteil, daß Rückführungskanäle in dem Rotorkörper selbst nicht notwendig sind. Diese Ausführung bedingt aber einen gewissen Aufwand für die Steuerung der Temperatur der als Heizmedium verwendeten Schmelze, die anschließend der vorzukristallisierenden Schmelze mit einer geeigneten Temperatur zugeführt werden müßte.

In den Unteransprüchen sind vorteilhafte Weiterbildungen der Erfindung gekennzeichnet. So bieten insbesondere die Merkmale der Ansprüche 4 und 5 die Möglichkeit die Wärmekapazität des Heizmediums zunächst beim Durchlaufen aller Kratzer voll auszunutzen, ehe es, z.B. bei der Verwendung von Dampf, als Kondensat zurückgeschickt wird.

Durch geeignete Ausbildung und Anordnung der Umlenkflächen für die Schmelze kann auch nach den Merkmalen der Ansprüche 12 und 13 eine axial gerichtete Mischbewegung der Schmelze im Vorkristallisator bewirkt werden, die entweder stets nach einer Richtung oder, wenn die Umlenkflächen der beiden Reihen von Kratzer entgegengesetzt gerichtet sind, jeweils wechselweise in der einen oder anderen Axialrichtung bewirkt werden. Es hat sich gezeigt, daß hierdurch aufgrund der besseren Vermischung auch die Wirksamkeit der so ausgestalteten Vorkristallisatoren hinsichtlich der Anreicherung der Schmelze mit Kristallen verbessert werden kann.

Diesem Zweck können auch die Merkmale des Anspruches 15 dienen, durch die aufgrund der Stege und der Umlenkflächen sowie der Kratzerausbildung eine wechselnde Beschleunigung der Schmelze erreicht werden kann, die zum einen mit dazu beiträgt, daß ein Festbacken von Kristallen am Rotorkörper verhindert wird, die zum anderen aber eine gleichmäßige Durchmischung und damit eine gute Aufbereitung der Schmelze für einen nachfolgenden Befestigungsvorgang bewirken.

Die Erfindung ist in der Zeichnung anhand von Ausführungsbeispielen gezeigt und wird im folgenden erläutert. Es zeigen:

Fig. 1 eine schematische Darstellung eines neuen Vorkristallisators im Schmelzenkreislauf,

Fig. 2 eine schematische Darstellung einer Ausführungsform des beim Vorkristallisator der Fig. 1 verwendeten Rotorkörpers,

Fig. 3 eine andere Ausführungsform des Rotorkörpers der Fig. 1,

Fig. 4 eine vergrößerte Detaildarstellung eines beim Rotorkörper der Fig. 3 verwendeten Kratzers,

Fig. 5 den Schnitt längs der Linie V-V durch Fig. 4,

Fig. 6 den Schnitt längs der Linie VI-VI durch Fig. 4 mit einem Querschnitt eines Befestigungssteges für einen Kratzer,

Fig. 7 einen Schnitt analog Fig. 6, jedoch durch einen Steg mit einer anders profilierten Außenkontur und

Fig. 8 einen weiteren Schnitt analog Fig. 6, jedoch durch eine andere Ausführungsform eines Steges zur Befestigung eines Kratzers.

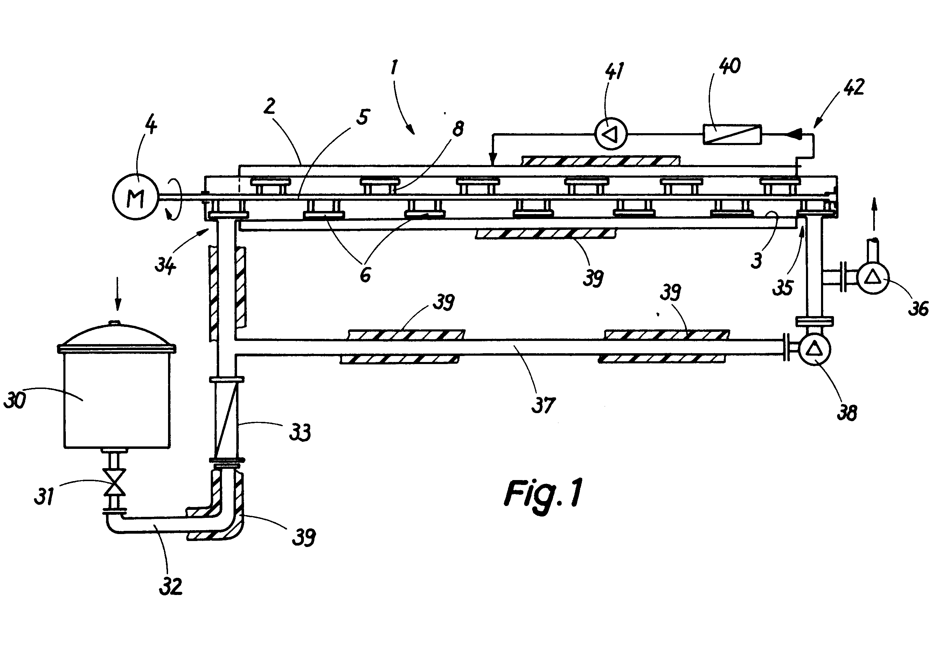

In Fig. 1 ist ein Vorkristallisator 1 gezeigt, der aus einem von einem Kühlmantel 2 umgebenen Rohr 3 besteht, welches von einem Behälter 30 aus über eine nicht gezeigte Pumpe und ein Ventil 31 durch die Leitung 32 und einen Wärmetauscher 33 mit einer Schmelze des vorzukristallisierenden Materiales versorgt wird. Das Rohr 3 ist mit einer Zuführöffnung 34 und einer Abführöffnung 35 versehen, durch die die Schmelze dem Rohr zuführbar und wieder aus diesem entnehmbar ist. Die Schmelze kann dann im vorkristallisierten Zustand in an sich bekannter Weise über eine Pumpe 36 der Weiterverarbeitung, beispielsweise einem Tropfenformer zugeführt werden. Das Rohr 3 ist außerdem aber mit einer parallel geschalteten Bypaßleitung 37 versehen, in der durch eine Pumpe 38 das nicht von der Pumpe 36 abgeförderte Material in einem Kreislauf zur Zufuhröffnung 34 zurückgeführt wird. Alle Rohre dieses Kreislaufes und auch der Zuführleitung 32 sind, was nicht näher dargestellt ist, als beheizte Doppelrohre ausgebildet und mit einer zusätzlichen Wärmeisolierung 39 versehen, die schematisch angedeutet ist.

Die so das Rohr 3 axial durchwandernde und im Bereich der Rohrwandung, durch die dort vorhandenen geringeren. Temperaturen, auskristallisierende Schmelze wird, um ein Anbacken an der Rohrwand zu verhindern, von einem Rotorkörper 5, der mit radial abstehenden Kratzern 6 versehen ist, an diesem Festsetzen gehindert. Die Kratzer 6 sind jeweils über radial abstehende Stege 8 am Rotorkörper 5 befestigt, der von einem Antriebsmotor 4 aus in Drehung versetzt wird. Die Kratzer 6 laufen dabei im Bereich der Rohrwandung um und sorgen dafür, daß sich die im Bereich der kühleren Rohrwandung bildenden Kristalle nicht an der Rohrwandung festsetzen, sondern in die Schmelze als Keime zur weiteren Vorkristallisierung zurückgebracht werden. Die Temperatur im Kühlmantel 2 wird in bekannter Weise über einen entsprechend gesteuerten Wärmetauscher 40 und eine Umwälzpumpe 41 für den schematisch angedeuteten Kühlmittelkreislauf 42 konstant gehalten.

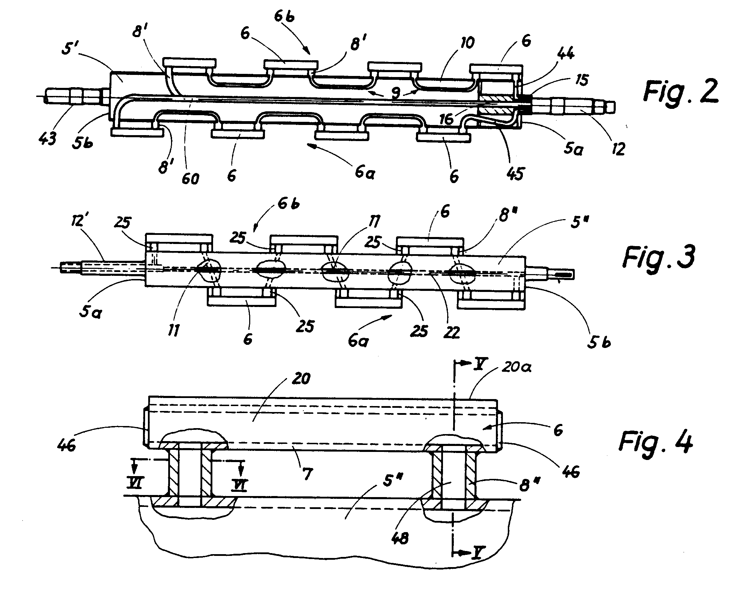

Der in dem Rohr 3 umlaufende Rotorkörper und die an ihm angebrachten Kratzer sind, wie Fig. 2 oder 3 zeigt, in besonderer Weise ausgebildet. Gemäß Fig. 2 ist der Rotorkörper 5' als ein geschlossener Hohlkörper ausgebildet, der auf seiner linken Stirnseite mit einem Lagerzapfen 43 auf seiner rechten Stirnseite 5a dagegen mit einem Lagerzapfen 12 für den Anschluß einer rotierenden Stopfbuchse versehen ist. Dieser Lagerzapfen ist in bekannter Weise so ausgebildet, daß in einem äußeren Bereich zwei Kanäle 15 und 16 konzentrisch zueinander verlaufen, wobei der Kanal 15 den innenliegenden Kanal 16 ringförmig umgeben kann. Von dem äußerem Kanal 15 aus gehen radiale Zuführungen 44 bzw. 45 zu den Kratzern 6, die der Stirnseite 5a am nächsten angeordnet sind. Beim Ausführungsbeispiel des Rotorkörpers 5' sind dabei auf einer Seite des Rotorkörpers entlang einer Längsmittelebene des Rotorkörpers 5' eine erste Reihe 6b von Kratzern 6 angeordnet, denen eine zweite Reihe 6a auf der diametral gegenüberliegenden Seite des Rotorkörpers 5' zugeordnet ist. Die einzelnen Kratzer 6 sind dabei axial gleichmäßig über die Länge des Rotorkörpers 5' verteilt, und zwar so, daß die auf gegenüberliegenden Reihen 6b, 6a angeordneten Kratzer gegenüber den benachbarten Kratzern der entgegengesetzten Reihe jeweils etwa um eine Kratzerlänge zueinander versetzt sind. Die Zuführung 44 zum ersten Kratzer 6 der Reihe 6b kann daher in etwa radial verlaufen, die Zuführung 45 dagegen muß radial und axial etwa S-förmig verlegt werden, damit der der Stirnseite 5a zugewandte Steg 8' des der Reihe 6a angeordneten ersten Kratzers 6 erreicht wird. Alle Kratzer 6 sind als Hohlkörper ausgebildet, deren Innenraum über ebenso hohl ausgebildete Stege 8' mit den Zuführleitungen 44 bzw. 45 und mit den weiteren als Rohrbögen 9 ausgebildete Verbindungsleitungen kommunizieren. Wie aus Fig. 2 erkennbar ist, sind dabei die Verbindungsbögen 9 innerhalb des Rotorkörpers 5' jeweils so gelegt, daß nur eine Reihe 6b bzw. 6a von Kratzern 6 hintereinander geschlossen ist, wobei am letzten Kratzer 6, d.h. an dem, der von der Stirnseite 5a am weitesten entfernt ist, der zweite von der Stirnseite 5a weggerichtete Steg 8' nicht mehr in einen Rohrbogen 9, sondern in den Innenraum des hohlen Rotorkörpers 5' mündet. Wird daher der Rotorkörper 5' durch den Lagerzapfen 12 bzw. durch den Ringkanal 15 hindurch mit Dampf versorgt, so strömt dieser Dampf zunächst durch die Zuführungen 44 und 45 in den Hohlraum des ersten Kratzers und von dort über die als Rohrbögen 10 ausgebildeten Strömungskanäle 9 zu den jeweils nachgeordneten Kratzern 6 jeder Reihe 6a bzw. 6b. Am letzten Kratzer tritt der schon abgekühlte Dampf in ein im Innenhohlraum des Rotorkörpers 5' angeordnetes Rücklaufrohr 60 ein und wird als Kondensat durch die Bohrung 16 des Lagerzapfens 12 wieder nach außen gefördert. Die der Stirnseite 5a zugewandten Kratzer werden daher auf diese Weise, da sich der Dampf auf seinem Strömungsweg abkühlt, stärker beheizt als die entgegengesetzt liegenden Kratzer. Dies erfolgt jedoch im Gegenstrom zu dem Verlauf der Schmelze im Rohr 3, die im Bereich der Stirnseite 5b des Rotorkörpers 5' zugeführt und im Bereich der Stirnseite 5a abgeführt wird.

Die Fig. 3 zeigt einen im Prinzip ähnlich aufgebauten Rotorkörper 5'', der jedoch bei diesem Ausführungsbeispiel nicht durchgehend hohl, sondern mit einer zentralen Rückführbohrung 22 für den kondensierten Dampf versehen ist. Der Dampf, der auch hier wieder durch ein Stopfbuchsenlager 12' an der Stirnseite 5a (des in Fig. 3 anders herum liegenden Rotorkörpers 5'') zugeführt wird, durchströmt bei diesem Ausführungsbeispiel aber die Kratzer jeweils einer Reihe 6a bzw. 6b, die wieder in Längsmittelebenen diametral gegenüberliegend verlaufen, nicht jeweils in einer Reihe nacheinander, sondern wird vom ersten Kratzer 6 aus über eine den Rotorkörper 5'' durchquerende Bohrung 11 zu dem benachbarten, aber gegenüberliegenden Kratzer 6 und von dort aus Zick-Zack-förmig durch den Rotorkörper 5'' gesandt. Am letzten Kratzer 6 erfolgt eine radiale Rückführung zur Bohrung 22.

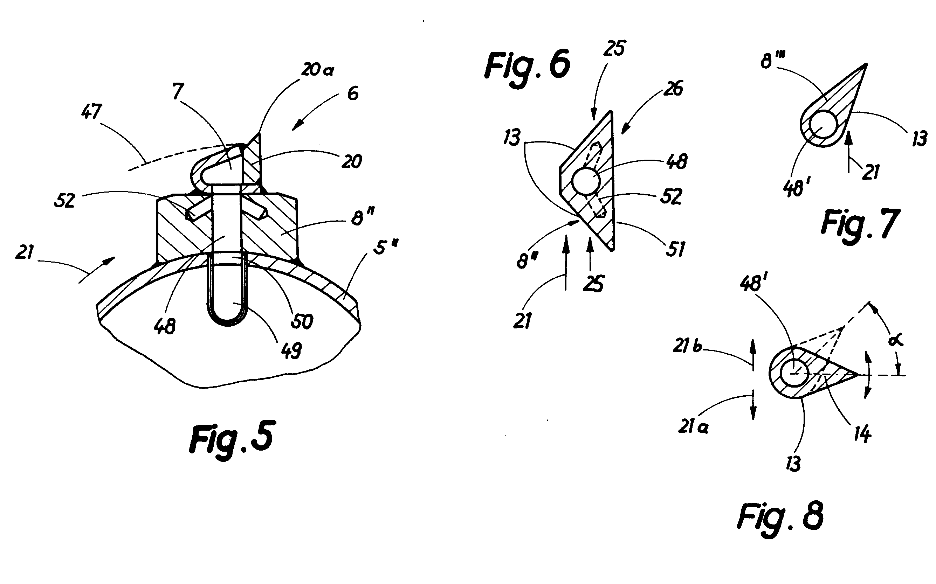

Die Fig. 4 bis 6 zeigen im Detail die Ausbildung der für den Rotorkörper 5'' verwendeten Kratzer 6. Die Kratzer 6 dieser Ausführungsform bestehen, wie insbesondere aus den Fig. 5 und 4 hervorgeht, aus rinnenförmigen Körpern 7, die an beiden Stirnseiten durch Platten 46 abgeschlossen sind, welche mit dem Rinnenkörper 7 dicht verschweißt sind. Ebenfalls dicht verschweißt ist mit dem Rinnenkörper 7 ein Messer 20, das somit auf seiner Rückseite unmittelbar von dem Heizmedium, beim Ausführungsbeispiel Dampf, beaufschlagt wird. Die Schneide 20a des Messers 20 bildet dabei den radial äußersten Punkt des Kratzers 6; die radiale Außenfläche des Rinnenkörpers 7 verläuft entgegen der Drehrichtung 21 des Rotorkörpers 5'' schräg nach hinten und entfernt sich daher von der Verbindungsstelle mit dem Messer 20 aus gegen die Drehrichtung gesehen immer mehr von einem zum Außenumfang des Rotorkörpers 5'' konzentrischen Kreis 47. Die Rückseite des Rinnenkörpers 7 ist beim Ausführungsbeispiel abgerundet ausgebildet. Dies hat für die Umströmung des Kratzers 6 eine gewisse Bedeutung. Es kann dadurch, neben der Temperaturwirkung des beheizten Kratzers 6 ein Anhaften von Kristallen am Kratzer 6 verhindert werden.

Aus den Fig. 4 bis 6 ergibt sich auch, daß die Stege 8'', mit denen die hohlen Kratzer 6 am Rotorkörper 5'' befestigt sind, in besonderer Weise ausgebildet werden. Zunächst darf festgehalten werden, daß die Stege mit einer Zuführbohrung 48 für das Heizmedium versehen sind, die beim Ausführungsbeispiel von einem Profilkörper ummantelt wird, der, wie aus Fig. 6 zu erkennen ist, im wesentlichen die Form eines gleichschenkligen Dreiecks aufweist. Jede der Bohrungen 48 steht entweder, wie in Fig. 3 gezeigt, über Verbindungsbohrungen 11 mit dem benachbarten Kratzer in Verbindung oder, wie das in Fig. 5 angedeutet ist, über Verbindungsbögen 49, die in entsprechende Öffnungen 50 des Rotorkörpers 5'' dicht eingesetzt sind.

Die Lage der dreieckförmigen Stege 8'' ist so gewählt, daß die gleichgroßen 25 des Dreiecks 26 jeweils Leitflächen 13 bilden, die schräg zu der Drehrichtung 21 liegen. Die Rückseite 51 des Dreiecks 26 liegt daher beim gezeigten Ausführungsbeispiel in einer Radialebene.

Durch diese Ausbildung wird beim Umlauf des Rotorkörpers 5'' die zwischen dem Messer 20 und den Stegen 8'' befindliche Schmelze von den Leitflächen 13, die auf die Schmelze auftreffen, in der Art von Strömungsschaufeln zerteilt und dadurch in Bewegung gehalten. Der Bereich zwischen Messer 20 und Rotorkörper 5'' wird somit bei der Rotation des Rotorkörpers 5'' axial zum Rotorkörper 5'' bewegt. Die Schmelze wird so an einem Festsetzen an den Stegen 8 oder am Messer 20 zusätzlich zu dem durch die Beheizung bewirkten Effekt gehindert. Wie Fig. 5 zu entnehmen ist, werden die nach vorne und hinten gewandten Teile der Stege 8'' noch zusätzlich durch die Anordnung von Sackbohrungen 52, die von der Bohrung 48 ausgehen, mitbeheizt. Auch dadurch kann ein Ansetzen von Schmelze bzw. von Kristallen aus der Schmelze an den Stegen 8'' verhindert werden.

Der Effekt der mechanischen Beeinflussung der Schmelze im Bereich der Stege kann natürlich auch durch eine andere Profilierung der Stege erreicht werden, als sie in Fig. 6 gezeigt ist. So zeigt beispielsweise Fig. 7 eine Profilierung von Stegen 8''' in Tropfenform, wobei die Anordnung dieses Tropfenprofiles zur Drehrichtung 21 so gewählt ist, daß eine Seite der Tropfenkontur wieder Ablenkflächen 13 für die Schmelze bildet.

Die Bewegung der Schmelze kann auch noch dadurch beeinflußt werden, daß, wie in Fig. 6 gezeigt ist, die Seiten 25 des Dreiecks 26 der Stege 8'' jeweils in bestimmter Weise ausgerichtet werden. So ist in Fig. 3 beispielsweise für die obere Reihe 6b der Kratzer 6 vorgesehen, daß jeweils die Seiten 25 jedes der Stege 8'' zur Stirnseite 5a hin gerichtet sind, während die Seiten 25 der Stege 8'' der unteren Reihe 6a von Kratzern zur Stirnseite 5b hinweisen. Diese Ausgestaltung bringt den Vorteil mit sich, daß die Schmelze innerhalb des Rohres 3 zu einer Art Kreislaufbewegung in Axialrichtung angeregt wird. Es hat sich gezeigt, daß hierdurch die Vermischung und die Anreicherung von Kristallen besonders gefördert wird. Möglich wäre es auch, die Leitflächen 13 aller Stege jeweils nach einer Richtung weisen zu lassen oder zugeordneten Leitflächen der Stege benachbarter Kratzer gegeneinander zu richten. Durch alle diese Maßnahmen kann die Mischungsbewegung der Schmelze gefördert werden. Dies ist schließlich aber auch noch dadurch möglich, daß der Motor 4 der die Rotorkörper 5', 5'' und 5 antreibt, diskontinuierlich betrieben wird. So kann der Motor beispielsweise kurzzeitig angehalten werden, so daß er jeweils nach kurzen Pausen zu einer Beschleunigung von Teilbereichen der Schmelze führt. Möglich ist aber auch, den Motor jeweils nur in seiner Antriebsgeschwindigkeit periodisch zu ändern, wobei auch dadurch Beschleunigungseffekte auf die Schmelze ausgeübt werden können.

Für einen solchen Betrieb des Vorkristallisators eignen sich dann Stegausbildungen für die beheizten Kratzer 6 besonders, wie sie in Fig. 8 gezeigt sind. Dort ist in nicht näher dargestellter Weise ein Stück 14 eines im übrigen nicht näher gezeigten Steges, das zwischen dem Kratzer 6 und dem Rotorkörper 5'' liegt, beweglich ausgebildet, und zwar so, daß es um die Achse der Bohrung 48' um einen bestimmten, durch Anschläge definierten Winkel $\alpha$ schwenkbar ist. Wird daher bei einer solchen Ausführung die Drehrichtung 21a und 21b gewechselt, was beim Wiederanlaufen des kurzzeitig stehenden Motors 4 möglich wäre, so würden die Teilstücke 14 der Stege je nach Drehrichtung in der einen oder anderen Richtung ausschwenken und so eine Beeinflussung der Schmelze jeweils in der gleichen Richtung bewirken können, obwohl an den Kratzern selbst eine Umkehr der Bewegung eintritt. Auch hierdurch kann eine Förderung des Effektes, durch Beheizung von Kratzern und Stegen ein Ansetzen von Kristallen an diesen Teilen der Rotorkörper zu vermeiden, erreicht werden.

**Patentansprüche**

1. Vorkristallisator, bestehend aus einem von einem Kühlmantel umgebenen und mit Zu- und Abführöffnungen für eine vorzukristallisierende Schmelze versehenen Rohr, in dem drehbar ein von einem Motor angetriebener Rotorkörper angeordnet ist, der mit radial abstehenden Kratzern versehen ist, die im Bereich der Rohrwand umlaufen, als Hohlkörper (7, 20) ausgebildet und von einem durch den Rotorkörper (5', 5'') zugeführten Heizmedium durchströmt sind, dadurch gekennzeichnet, daß die Hohlkörper (7, 20) mit mindestens zwei hohlen Stegen (8) auf dem Rotorkörper (5', 5'') aufgesetzt sind, daß jeder Steg (8) mit einem in dem Rotorkörper (5', 5'') verlaufenden Strömungskanal (9) zur Führung des Heizmediums verbunden ist und daß die Außenkontur der Stege (8) mit Umlenkflächen (13) für die Schmelze versehen ist.

2. Vorkristallisator nach Anspruch 1, dadurch gekennzeichnet, daß die Strömungskanäle (9) als innerhalb des Rotorkörpers (5,) verlegte Rohrbögen (10) ausgebildet sind.

3. Vorkristallisator nach Anspruch 1, dadurch gekennzeichnet, daß die Strömungskanäle (9) als in dem Rotorkörper (5'') verlaufende Bohrung (11) ausgebildet sind.

4. Vorkristallisator nach Anspruch 2 oder 3 mit Kratzern, die an zwei diametral gegenüberliegenden Seiten des Rotorkörpers angeordnet sind, dadurch gekennzeichnet, daß die Strömungskanäle (9) jeweils im Bereich einer Kratzerreihe (6a) axial in dem Rotorkörper (5') angeordnet verlaufen und die Kratzer einer Reihe nacheinander verbinden, und daß der Rückfluß des Heizmediums durch den hohlen Rotorkörper (5') erfolgt.

5. Vorkristallisator nach Anspruch 2 oder 3 mit Kratzern, die an mindestens zwei diametral gegenüberliegenden Seiten des Rotorkörpers angeordnet sind, dadurch gekennzeichnet, daß die Strömungskanäle (9) jeweils wechselseitig von dem Kratzer (6) einer Reihe (6a) zu dem versetzt gegenüberliegenden Kratzer (6) der anderen Reihe (6b) verlaufen, so daß alle Kratzer in Reihe geschaltet sind, und daß der Rückfluß des Heizmediums durch eine zentrale Bohrung (22) des Rotorkörpers (5'') erfolgt.

6. Vorkristallisator nach einem der Ansprüche 1 bis 5, dadurch gekennzeichnet, daß als Heizmedium Dampf vorgesehen ist, der als Kondensat durch den Rotorkörper (5', 5'') zurückfließt.

7. Vorkristallisator nach Anspruch 6, dadurch gekennzeichnet, daß an einer Stirnseite (5a) des Rotorkörpers (5', 5'') ein Lagerzapfen (12) für den Anschluß einer rotierenden Stopfbuchse vorgesehen ist, der konzentrisch angeordnete Kanäle (15, 16) zur getrennten Zu- und Abfuhr des Heizmediums besitzt.

8. Vorkristallisator nach Anspruch 1, dadurch gekennzeichnet, daß die Umlenkflächen (13) Teile eines die Außenkontur bildenden gleichschenkligen Dreiecks sind.

9. Vorkristallisator nach Anspruch 1, dadurch gekennzeichnet, daß die Umlenkflächen (13) Teile eines Tropfenprofiles sind.

10. Vorkristallisator nach den Ansprüchen 1 und 9, dadurch gekennzeichnet, daß die Umlenkflächen (13) Teile eines um einen bestimmten Winkel um die Achse der Stege schwenkbaren Zwischenstückes (14) sind.

11. Vorkristallisator nach den Ansprüchen 4 und 8, dadurch gekennzeichnet, daß die gleichlangen Seiten (25) des Dreiecks (26) aller Stege (8'') einer Reihe (6a bzw. 6b) von Kratzern (6) nach einer Stirnseite (5a bzw. 5b) des Rotorkörpers (5'') gerichtet sind.

12. Vorkristallisator nach Anspruch 11, dadurch gekennzeichnet, daß die gleichlangen Seiten (25) des Dreiecks (26) der Stege (8'') der beiden Reihen (6a bzw. 6b) nach unterschiedlichen Stirnseiten (5a bzw. 5b) weisen.

13. Vorkristallisator nach Anspruch 1, dadurch gekennzeichnet, daß die Hohlkörper der Kratzer (6) durch einen etwa U-förmig ausgebildeten und an beiden Stirnseiten geschlossenen Rinnenkörper (7) und durch ein dicht mit diesem Teil verbundenes Messer (20) gebildet sind.

14. Vorkristallisator nach Anspruch 13, dadurch gekennzeichnet, daß die Messerschneide (20a) den am weitesten radial von der Achse des Rotorkörpers (5'') abragenden Teil bildet und daß der Rinnenkörper (7) gegen die Drehrichtung (21) des Rotorkörpers (5'') schräg nach hinten abfallend ausgebildet ist.

15. Vorkristallisator nach Anspruch 1 und einem der übrigen Ansprüche, dadurch gekennzeichnet, daß der Antrieb des Rotorkörpers (5, 5', 5'') diskontinuierlich erfolgt.

16. Vorkristallisator nach Anspruch 7, dadurch gekennzeichnet, daß der innere Kanal (16) der konzentrischen Kanäle durch ein Rohr (60) verlängert ist, das in den Rotorkörper (5') hereinreicht und das zur Rückführung des Heizmediums dient.

**Claims**

1. A precrystalliser, consisting of a tube enclosed by a cooling jacket and provided with feed and discharge apertures for a molten substance which is to be precrystallised and in which there is a rotatably disposed rotor body driven by a motor, the rotor body being provided with radially projecting scrapers which rotate in the region of the tube wall, are constructed as hollow bodies (7, 20) and have a heating medium flowing through them which is supplied via the rotor body (5', 5''), characterised in that the hollow bodies (7, 20) have at least two hollow webs (8) by which they are mounted on the rotor body (5', 5'') and in that each web (8) is connected to a flow passage (9) extending in the rotor body (5', 5'') and adapted to convey the heating medium and in that the outer contours of the webs (8) are provided with deflecting surfaces (13) for the molten material.

2. A precrystalliser according to Claim 1, characterised in that the flow passages (9) are constructed as pipe bends (10) which are laid inside the rotor body (5').

3. A precrystalliser according to Claim 1, characterised in that the flow passages (9) are constructed as bores (11) extending in the rotor body (5'').

4. A precrystalliser according to Claim 2 or 3 with scrapers disposed on two diametrically opposite sides of the rotor body, characterised in that the flow passages (9) are disposed in each case in the region of a row (6a) of scrapers axially disposed in the rotor body (5') and connect the scrapers of a row in series and in that the heating medium flows back through the hollow rotor body (5').

5. A precrystalliser according to Claim 2 or 3 with scrapers disposed on at least two diametrically opposite sides of the rotor body, characterised in that the flow passages (9) extend in each case alternately from the scraper (6) of one row (6a) to the staggered oppositely disposed scraper (6) of the other row (6b) so that all the scrapers are connected in series and in that the heating medium flows back through a central bore (22) in the rotor body (5'').

6. A precrystalliser according to one of Claims 1 to 5, characterised in that the heating medium provided is steam which flows back through the rotor body (5', 5'') as a condensate.

7. A precrystalliser according to Claim 6, characterised in that there is provided at one end face (5a) of the rotor body (5', 5'') a bearing journal (12) for the connection of a rotating gland which has concentrically disposed passages (15, 16) for the separate feed and discharge of the heating medium.

8. A precrystalliser according to Claim 1, characterised in that the deflecting surfaces (13) are parts of an equilateral triangle which forms the outer contours.

9. A precrystalliser according to Claim 1, characterised in that the deflecting surfaces (13) are parts of a drop-shaped profile.

10. A precrystalliser according to Claims 1 and 9, characterised in that the deflecting surfaces (13) are parts of an intermediate member 14) adapted to pivot through a certain angle about the axis of the webs.

11. A precrystalliser according to Claims 4 and 8, characterised in that the equally long sides (25) of the triangle (26) of all webs (8'') in a row (6a or 6b) of scrapers (6) are directed towards one end face (5a or 5b) of the rotor body (5'').

12. A precrystalliser according to Claim 11, characterised in that the equally long sides (25) of the triangle (26) of the webs (8'') of both rows (6a, 6b) point to different end faces (5a or 5b).

13. A precrystalliser according to Claim 1, characterised in that the hollow bodies of the scrapers (6) are formed by a substantially U-shaped channel member (7) which is closed at both ends and by a blade (20) which is connected to this part in a sealing-tight fashion.

14. A precrystalliser according to Claim 13, characterised in that the blade edge (20a) forms the part which projects farthest radially from the axis of the rotor body (5'') and in that the channel member (7) is constructed to fall away rearwardly and obliquely against the direction of rotation (21) of the rotor body (5'').

15. A precrystalliser according to Claim 1 and one of the other Claims, characterised in that the drive of the rotor body (5, 5', 5'') is intermittent.

16. A precrystalliser according to Claim 7, characterised in that the inner passage (16) of the concentric passages is extended by a tube (60) which extends into the rotor body (5') and which serves for the return of heating medium.

## Revendications

1. Dispositif de précristallisation constitué d'un tube entouré d'une chemise de refroidissement et pourvu d'orifices d'alimentation et d'évacuation pour une masse fondue à précristalliser, dans lequel est monté à rotation un rotor entraîné par un moteur et pourvu de racloirs en saillie radialement qui tournent à proximité de la paroi du tube, sont conçus comme des corps creux (7, 20) et sont traversés par un milieu de chauffage admis à travers le rotor (5', 5''), caractérisé en ce que les corps creux (7, 20) sont montés par au moins deux entretoises creuses (8) sur le rotor (5', 5''), que chaque entretoise (8) est raccordée à un canal d'écoulement (9) s'étendant dans le rotor (5', 5'') pour l'amenée du milieu de chauffage et que le contour extérieur des entretoises (8) est pourvu de surfaces déflectrices (13) pour la masse fondue.

2. Dispositif de précristallisation suivant la revendication 1, caractérisé en ce que les canaux d'écoulement (9) ont la forme de tuyaux coudés (10) installés à l'intérieur du rotor (5').

3. Dispositif de précristallisation suivant la revendication 1, caractérisé en ce que les canaux d'écoulement (9) ont la forme de forures (11) s'étendant dans le rotor (5'').

4. Dispositif de précristallisation suivant la revendication 2 ou 3, comportant des racloirs qui sont disposés sur deux côtés diamétralement opposés du rotor, caractérisé en ce que les canaux d'écoulement (9) s'étendent chaque fois axialement dans le rotor (5') dans le domaine d'une rangée de racloirs (6a) et raccordent successivement les racloirs d'une rangée, et que le retour du milieu de chauffage s'effectue à travers le rotor creux (5').

5. Dispositif de précristallisation suivant la revendication 2 ou 3, comportant des racloirs qui sont disposés sur au moins deux côtés diamétralement opposés du rotor, caractérisé en ce que les canaux d'écoulement (9) s'étendent chaque fois en alternance du racloir (6) d'une rangée (6a) au racloir (6) opposé et décalé de l'autre rangée (6b), de sorte que tous les racloirs sont raccordés en série et que le retour du milieu de chauffage s'effectue par un alésage central (22) du rotor (5'').

6. Dispositif de précristallisation suivant l'une quelconque des revendications 1 à 5, caractérisé en ce qu'à titre de milieu de chauffage, est prévue de la vapeur dont le retour sous forme de condensat s'effectue à travers le rotor (5', 5'').

7. Dispositif de précristallisation suivant la revendication 6, caractérisé en ce qu'un tourillon (12) est prévu sur une face d'about (5a) du rotor (5', 5'') pour le raccordement d'un presse-étoupe tournant qui comprend des canaux concentriques (15, 16) pour l'alimentation et l'évacuation séparées du milieu de chauffage.

8. Dispositif de précristallisation suivant la revendication 1, caractérisé en ce que les surfaces déflectrices (13) font partie d'un triangle isocèle formant le contour extérieur.

9. Dispositif de précristallisation suivant la revendication 1, caractérisé en ce que les surfaces déflectrices (13) font partie d'un profil en forme de goutte.

10. Dispositif de précristallisation suivant les revendications 1 et 9, caractérisé en ce que les surfaces déflectrices (13) font partie d'une pièce intermédiaire (14) pouvant pivoter d'un angle déterminé autour de l'axe de l'entretoise.

11. Dispositif de précristallisation suivant les revendications 4 et 8, caractérisé en ce que les côtés de même longueur (25) du triangle (26) de toutes les entretoises (8'') d'une rangée (6a ou 6b) de racloirs (6) sont orientés vers une face d'about (5a ou 5b) du rotor (5'').

12. Dispositif de précristallisation suivant la revendication 11, caractérisé en ce que les côtés de même longueur (25) du triangle (26) des entretoises (8'') des deux rangées (6a ou 6b) sont orientés vers des faces d'about différentes (5a ou 5b).

13. Dispositif de précristallisation suivant la revendication 1, caractérisé en ce que les corps creux des racloirs (6) sont formés par un chenal (7) de forme en substance en U et fermé à ses deux faces d'about et par une lame (20) reliée de manière étanche à ce chenal.

14. Dispositif de précristallisation suivant la revendication 13, caractérisé en ce que le tranchant (20a) de la lame forme la partie la plus éloignée dans le sens radial de l'axe du rotor (5'') et que le chenal (7) va en s'abaissant obliquement vers l'arrière dans le sens opposé à celui de la rotation (21) du rotor (5'').

15. Dispositif de précristallisation suivant la revendication 1 et l'une des autres revendications, caractérisé en ce que l'entraînement du rotor (5, 5', 5'') est discontinu.

16. Dispositif de précristallisation suivant la revendication 7, caractérisé en ce que le canal intérieur (16) des canaux concentriques est prolongé par un tube (60) qui s'étend dans le rotor (5') et assure le retour du milieu de chauffage.

Fig.1

EP 0 247 348 B1

Fig. 2

Fig. 3

Fig. 4

EP 0 247 348 B1

Fig. 7

Fig. 8

Fig. 6

Fig. 5